(19)

Europäisches
Patentamt
European
Patent Office
Office européen
des brevets

(11) **EP 2 869 118 A1**

(12) **EUROPEAN PATENT APPLICATION**

(43) Date of publication:
**06.05.2015 Bulletin 2015/19**

(51) Int Cl.:
***G03B 21/14*** *(2006.01)*

(21) Application number: **14189656.3**

(22) Date of filing: **21.10.2014**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (71) Applicant: **Funai Electric Co., Ltd.**<br>**Daito-shi,**<br>**Osaka 574-0013 (JP)** |
| (30) Priority: **31.10.2013 JP 2013227418** | (72) Inventor: **Furutani, Senichi**<br>**Osaka, 574-0013 (JP)** |
| | (74) Representative: **Vigand, Philippe et al**<br>**Novagraaf International SA**<br>**3 chemin de l'Echo**<br>**1213 Onex Geneva (CH)** |

(54) **Axis deviation detecting device, projector device, and axis deviation detecting method**

(57)     An axis deviation detecting device (100, 200) includes: a first position acquisition unit (101) which acquires a position of a first projection point projected targeting a first target point on a first projection screen located at a first distance from the projector device; a second position acquisition unit (102) which acquires a position of a second projection point projected targeting a second target point on a second projection screen located at a second distance from the projector device; a first axis deviation detecting unit (103) which detects a value of a translational deviation along a horizontal axis of the projector device and a value of a rotational deviation about a vertical axis of the projector device, using (i) a horizontal component of a first positional difference between the first target point and the first projection point and (ii) a horizontal component of a second positional difference between the second target point and the second projection point; and a second axis deviation detecting unit (104) which detects a value of a translational deviation along the vertical axis of the projector device and a value of a rotational deviation about the horizontal axis of the projector device, using (i) a vertical component of the first positional difference and (ii) a vertical component of the second positional difference.

FIG. 4

EP 2 869 118 A1

## Description

### Field

The present invention relates to an axis deviation detecting device which detects an axis deviation of a projector device which projects an image on a projection screen.

### Background

A projector device which projects an image on a projection screen includes a plurality of optical components. In assembling the optical components, a relative error can arise in placement of the optical components in some cases. In addition, the projector device can be placed incorrectly with respect to the projection screen in some cases. Such a placement error of the projector device is called an axis deviation and causes distortion or positional shift in a projected image.

In view of the above, a technique which detects an axis deviation of a projector device and removes distortion in a projected image has been proposed (see Patent literature (PTL) 1: Japanese Unexamined Patent Application Publication No. 2005-039518). PTL 1 discloses a technique that detects an axis deviation of a projector device based on position information of a marker irradiated on a screen, to perform scaling on an image signal.

### Summary

#### Technical Problem

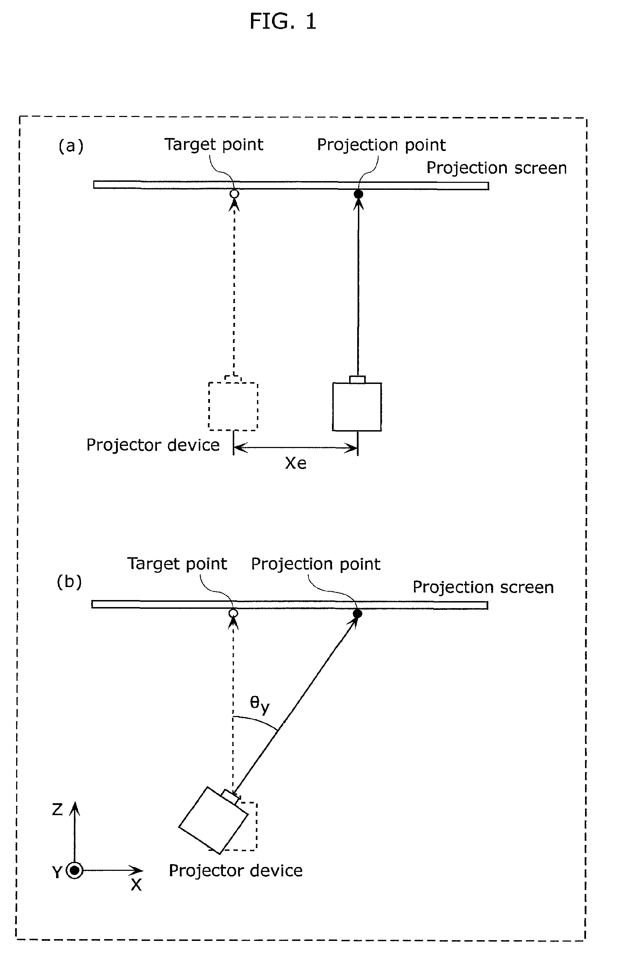

With the above-described conventional technique, however, it is difficult to detect a plurality of axis deviations including a translational deviation along an axis and a rotational deviation about an axis, even when a specific axis deviation including a translational deviation along an axis or a rotational deviation about an axis can be detected. The following describes the difficulty of detecting a plurality of axis deviations including the translational deviation along an axis and the rotational deviation about an axis, with reference to FIG. 1.

FIG. 1 is a diagram for explaining the difficulty of detecting a plurality of axis deviations including a translational deviation along an axis and a rotational deviation about an axis. It is to be noted that, here, a Z-axis direction is an optical axis direction of a projector device. An X-axis direction is a horizontal axis direction of a projection screen. A Y-axis direction is a vertical axis direction of the projection screen.

In addition, in FIG. 1, a broken line represents a projector device without an axis deviation and a light beam emitted from the projector device. In other words, the broken line represents a virtual projector device which is disposed ideally and a virtual light beam emitted therefrom. A solid line represents a projector device having an axis deviation and a light beam emitted from the projector device. In other words, the solid line represents an actual projector device and an actual light beam emitted therefrom.

In (a) in FIG. 1, a value of a translational deviation along the X-axis is denoted as Xe. In the case where a projector device has a translational deviation along the X-axis as described above, the projector device projects a point (projection point) at a position away from a target point in the X-axis direction.

In (b) in FIG. 1, a value of a rotational deviation about the Y-axis is denoted as $\theta y$. In the case where a projector device has the rotational deviation about the Y-axis as described above, the projector device projects a point (projection point) at a position away from a target point in the X-axis direction, as with the case of (a) in FIG. 1.

Accordingly, it is difficult to determine whether a positional difference in the X-axis direction between the target point and the projection point is caused by (i) a translational deviation along the X-axis, (ii) a rotational deviation about the Y-axis, or (iii) a combination of them. The same holds true for the case of a translational deviation along the Y-axis and a rotational deviation about the X-axis. In other words, it is difficult to detect a plurality of axis deviations including a translational deviation along an axis and a rotational deviation about an axis.

In view of the above, an object of the present invention is to provide an axis deviation detecting device capable of efficiently detecting a plurality of axis deviations of a projector device, which include a translational deviation along an axis and a rotational deviation about an axis.

#### Solution to Problem

An axis deviation detecting device according to an aspect of the present invention is an axis deviation detecting device which detects an axis deviation of a projector device, the axis deviation detecting device including: a first position acquisition unit configured to acquire a position of a first projection point projected targeting a first target point on a first projection screen that is located at a first distance from the projector device; a second position acquisition unit configured to acquire a position of a second projection point projected targeting a second target point on a second projection screen that is located at a second distance from the projector device, the second target point corresponding to the first target point; a first axis deviation detecting unit configured to detect a value of a translational deviation along a horizontal axis of the projector device and a value of a rotational deviation about a vertical axis of the projector device, using (i) a horizontal component of a first positional difference between the first target point and the first projection point and (ii) a horizontal component of a second positional difference between the second target point and the second projection point; and a second axis deviation detecting unit configured to detect a value of a translational deviation along the vertical axis of the projector device and a value of a rotational deviation about the horizontal axis of the projector device, using (i) a vertical component of the first positional difference and (ii) a vertical component of the second positional difference.

According to this configuration, the axis deviation detecting device is capable of detecting four values of axis deviations (values of a translational deviation along the horizontal axis, a rotational deviation about the vertical axis, a translational deviation along the vertical axis, and a rotational deviation about the horizontal axis) using the positions of the first projection point and the second projection point projected on the first projection screen and the second projection screen which have different distances from the projector device. In sum, the axis deviation detecting device is capable of efficiently detecting a plurality of axis deviations which include a translational deviation along an axis and a rotational deviation about an axis. As a result, the axis deviation detecting device is capable of reducing the load of a user in assembling and placing the projector device.

For example, the axis deviation detecting device may further include: a third position acquisition unit configured to acquire a position of a third projection point projected targeting a third target point on the first projection screen; and a third axis deviation detecting unit configured to detect a value of a translational deviation along an optical axis of the projector device and a value of a rotational deviation about the optical axis, using (i) a positional relationship between the first projection point and the third projection point and (ii) a positional relationship between the first target point and the third target point.

According to this configuration, with the axis deviation detecting device, it is possible to detect a value of a translational deviation along an optical axis and a value of a rotational deviation about an optical axis, using the position of the third projection point projected onto the first projection screen. Therefore, the axis deviation detecting device is capable of efficiently detecting more axis deviations including a translational deviation along an axis and a rotational deviation about an axis.

For example, the third axis deviation detecting unit may: correct the position of the first projection point and the position of the third projection point, using the value of the translational deviation along the horizontal axis, the value of the rotational deviation about the vertical axis, the value of the translational deviation along the vertical axis, and the value of the rotational deviation about the horizontal axis; detect the value of the translational deviation along the optical axis of the projector device, using (i) a length between the corrected position of the first projection point and the corrected position of the third projection point and (ii) a length between the position of the first target point and the position of the third target point; and detect the value of the rotational deviation about the optical axis of the projector device, using an angle between (i) a line passing through the corrected position of the first projection point and the corrected position of the third projection point and (ii) a line passing through the first target point and the third target point.

According to this configuration, the axis deviation detecting device is capable of detecting a value of a translational deviation along an optical axis and a value of a rotational deviation about an optical axis, using the positions of the first projection point and the third projection point which are corrected using four values of axis deviations (values of a translational deviation along the horizontal axis, a rotational deviation about the vertical axis, a translational deviation along the vertical axis, and a rotational deviation about the horizontal axis).

A projector device according to another aspect of the present invention includes: a storage unit configured to store values of a plurality of axis deviations which include a translational deviation along an axis and a rotational deviation about an axis and are detected by the axis deviation detecting device as described above; an image processing unit configured to correct the image using the values of the plurality of axis deviations which include the translational deviation along the axis and the rotational deviation about the axis and are stored in the storage unit; and a projection unit configured to project the corrected image on the projection screen.

According to this configuration, the projector device is capable of storing, into the storage unit, values of a plurality of axis deviations which include a translational deviation along an axis and a rotational deviation about an axis and are detected by the above-described axis deviation detecting device. Furthermore, the projector device is capable of correcting the image using the values, stored in the storage unit, of a plurality of axis deviations which include a translational deviation along an axis and a rotational deviation about an axis and. This allows the projector device to reduce distortion and positional shift of the image projected on the projection screen.

For example, the projector device described above may further include a distance acquisition unit configured to acquire a distance between the projector device and the projection screen, wherein the image processing unit may correct the image using (i) the values of the plurality of axis deviations which include the translational deviation along the axis and the rotational deviation about the axis and are stored in the storage unit and (ii) the acquired distance.

According to this configuration, the projector device is capable of correcting an image using the distance between the projector device and a projection screen. Accordingly, the projector device is capable of properly correcting an image even when the distance between the projector device and the projection screen differs from an expected distance (a distance at the time when values of axis deviations were detected previously). In other words, the projector device is capable of properly correcting an image according to an actual state of placement.

A projector device according to another aspect of the present invention is a projector device which projects an image on a projection screen, the projector device including: the axis deviation detecting device described above; an image processing unit configured to correct the image using values of a plurality of axis deviations which include a translational deviation along an axis and a rotational deviation about an axis and are detected by the axis deviation detecting device; and a projection unit configured to project the corrected image on the projection screen.

According to this configuration, the projector device can include the above-described axis deviation detecting device. Accordingly, at the time of placement of the projector device, the projector device is capable of detecting values of a plurality of axis deviations which include a translational deviation along an axis and a rotational deviation about an axis, according to an actual positional relationship between the projector device and a projection screen. As a result, the projector device is capable of more properly correcting an image according to an actual state of placement.

For example, the projector device may further include a change value acquisition unit configured to acquire a positional change value of the projector device with respect to the projection screen, wherein the image processing unit may: adjust at least one of the values of the plurality of axis deviations which include the translational deviation along the axis and the rotational deviation about the axis, based on the acquired positional change value; and correct the image using the values of the plurality of axis deviations which include the translational deviation along the axis and the rotational deviation about the axis and include at least one of the adjusted values of the plurality of axis deviations.

According to this configuration, the projector device is capable of adjusting the value of an axis deviation, using the value of a positional change of the projector device with respect to the projection screen. Accordingly, even when a position of the projector device changes after a value of an axis deviation is detected, for example, the projector device is capable of easily adjusting the value of an axis deviation according to the positional change. As a result, the projector device is capable of more properly correcting an image according to an actual state of placement.

A head-up display device according to another aspect of the present invention includes the projector device described above, and a transparent display panel including the projection screen.

According to this configuration, the head-up display device is capable of producing advantageous effects equivalent to advantageous effects produced by the above-described projector device.

It should be noted that the present invention can not only be implemented as an axis deviation detecting device including characterizing processing units such as those described here, but as an axis deviation detecting method in which the processes performed by the characterizing processing units included in the axis deviation detecting device are implemented as steps. Moreover, the present invention can be implemented as a computer program for making a computer perform as the characterizing processing units included in the axis deviation detecting device, or as a computer program that causes a computer to execute the characterizing steps included in the axis deviation detecting method. It goes without saying that the computer program can be circulated on a non-transitory computer-readable storage recording medium such as a compact disc-read only memory (CD-ROM) or over a communications network such as the Internet.

**Advantageous Effects**

An axis deviation detecting device according to an aspect of the present invention is capable of efficiently detecting a plurality of axis deviations of a projector device which include a translational deviation along an axis and a rotational deviation about an axis.

**Brief Description of Drawings**

[FIG. 1] FIG. 1 is a diagram for explaining the difficulty of detecting a plurality of axis deviations including a translational deviation along an axis and a rotational deviation about an axis.
[FIG. 2] FIG. 2 is a block diagram illustrating an example of the functional configuration of an axis deviation detecting device according to Embodiment 1.
[FIG. 3] FIG. 3 is a flowchart illustrating an example of an operation performed by the axis deviation detecting device according to Embodiment 1.
[FIG. 4] FIG. 4 is a diagram for explaining a specific example of a method of detecting a value of a translational deviation along an X-axis and a value of a rotational deviation about a Y-axis, according to Embodiment 1.
[FIG. 5] FIG. 5 is a diagram for explaining a specific example of the method of detecting a value of a translational deviation along the X-axis and a value of a rotational deviation about the Y-axis, according to Embodiment 1.

[FIG. 6] FIG. 6 is a block diagram illustrating an example of the functional configuration of an axis deviation detecting device according to Embodiment 2.

[FIG. 7] FIG. 7 is a flowchart illustrating an example of an operation performed by the axis deviation detecting device according to Embodiment 2.

[FIG. 8] FIG. 8 is a flowchart illustrating an example of an operation performed by a third axis deviation detecting unit according to Embodiment 2.

[FIG. 9A] FIG. 9A is a diagram for explaining a specific example of the method of detecting a value of a translational deviation along a Z-axis and a value of a rotational deviation about the Z-axis according to Embodiment 2.

[FIG. 9B] FIG. 9B is a diagram for explaining a specific example of the method of detecting a value of a translational deviation along the Z-axis and a value of a rotational deviation about the Z-axis according to Embodiment 2.

[FIG. 10] FIG. 10 is an example of how a HUD device according to Embodiment 3 is installed.

[FIG. 11] FIG. 11 illustrates an example of what a user sees when looking through a windshield.

[FIG. 12] FIG. 12 is a block diagram illustrating an example of the configuration of the HUD device according to Embodiment 3.

[FIG. 13] FIG. 13 is a flowchart illustrating an operation performed by a projector device according to Embodiment 3.

[FIG. 14] FIG. 14 is a block diagram illustrating a configuration of the projector device according to Embodiment 4.

[FIG. 15] FIG. 15 is a flowchart illustrating an operation performed by the projector device according to Embodiment 4.

[FIG. 16] FIG. 16 is a block diagram illustrating a configuration of a projector device according to Embodiment 5.

[FIG. 17] FIG. 17 is a flowchart illustrating an operation performed by the projector device according to Embodiment 5.

[FIG. 18] FIG. 18 is a block diagram illustrating a configuration of a projector device according to Embodiment 6.

**Description of Embodiments**

Hereinafter, certain exemplary embodiments are described in greater detail with reference to the accompanying Drawings. It should be noted that the exemplary embodiments described below each show a specific preferred example of the present invention. The numerical values, shapes, materials, structural elements, the arrangement and connection of the structural elements etc. shown in the following exemplary embodiments are mere examples, and therefore do not limit the present invention. As such, among the structural elements in the following exemplary embodiment, structural elements not recited in any one of the independent claims are described as structural elements of a preferable embodiment, and are not absolutely necessary to overcome the problem according to the present invention.

[Embodiment 1]

[Configuration]

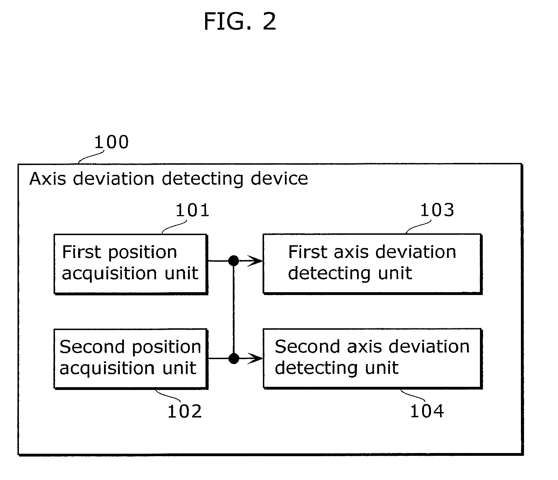

FIG. 2 is a block diagram illustrating an example of the functional configuration of an axis deviation detecting device according to Embodiment 1. As illustrated in FIG. 2, the axis deviation detecting device 100 includes: a first position acquisition unit 101; a second position acquisition unit 102; a first axis deviation detecting unit 103; and a second axis deviation detecting unit 104.

The first position acquisition unit 101 acquires a position of a first projection point projected targeting a first target point on a first projection screen. The first projection screen is located at a first distance from a projector device.

More specifically, the first position acquisition unit 101 acquires, from a user, position information (a coordinate value, for example) indicating a position of the first projection point on the first projection screen via a user interface, for example. In addition, the first position acquisition unit 101 may acquire position information indicating a position of the first projection point on the first projection screen from a sensor which detects the position of the first projection point on the first projection screen, for example.

The second position acquisition unit 102 acquires a position of a second projection point projected targeting a second target point on a second projection screen, which corresponds to the first target point. The second projection screen is located at a second distance from the projector device. The second distance is different from the first distance.

More specifically, the second position acquisition unit 102 acquires, from a user, position information indicating a position of the second projection point on the second projection screen via a user interface, for example. In addition, the second position acquisition unit 102 may acquire position information indicating a position of the second projection point on the second projection screen from a sensor which detects the position of the second projection point on the second projection screen, for example.

It should be noted that the position of a projection point projected targeting a target point means a position of an actually projected point which has been projected targeting the target point. Accordingly, when the projector device has an axis deviation, there is a case where the position of the target point does not match the position of the projection point.

The first axis deviation detecting unit 103 detects a value of a translational deviation along a horizontal axis and a value of a rotational deviation about a vertical axis of the projector device, using (i) a horizontal component of a first positional difference between a first target point and a first projection point and (ii) a horizontal component of a second positional difference between a second target point and a second projection point.

For example, the first axis deviation detecting unit 103 first calculates a difference value (a horizontal component of the first positional difference) between an X component of a coordinate value of the first target point and an X component of a coordinate value of the first projection point. Furthermore, the first axis deviation detecting unit 103 calculates a difference value (a horizontal component of the second positional difference) between an X component of a coordinate value of the second target point and an X component of a coordinate value of the second projection point. Then, the first axis deviation detecting unit 103 detects a value of a translational deviation along an X-axis and a value of a rotational deviation about a Y-axis, using the two difference values calculated as described above.

It is to be noted that a specific example of a method of detecting a value of the translational deviation along the X-axis and a value of the rotational deviation about the Y-axis will be described later with reference to the accompanying Drawings.

The second axis deviation detection unit 104 detects a value of a translational deviation along a vertical axis and a value of a rotational deviation about a horizontal axis of the projector device, using (i) a vertical component of the first positional difference between the first target point and the first projection point and (ii) a vertical component of the second positional difference between the second target point and the second projection point.

For example, the second axis deviation detecting unit 104 first calculates a difference value (a vertical component of the first positional difference) between a Y component of a coordinate value of the first target point and a Y component of a coordinate value of the first projection point. Furthermore, the second axis deviation detecting unit 104 calculates a difference value (a vertical component of the second positional difference) between a Y component of a coordinate value of the second target point and a Y component of a coordinate value of the second projection point. Then, the second axis deviation detecting unit 104 detects a value of a translational deviation along the Y-axis and a value of a rotational deviation about the X-axis, using the two difference values calculated as described above.

[Operation]

Next, an operation performed by the axis deviation detecting device 100 configured as described above will be explained.

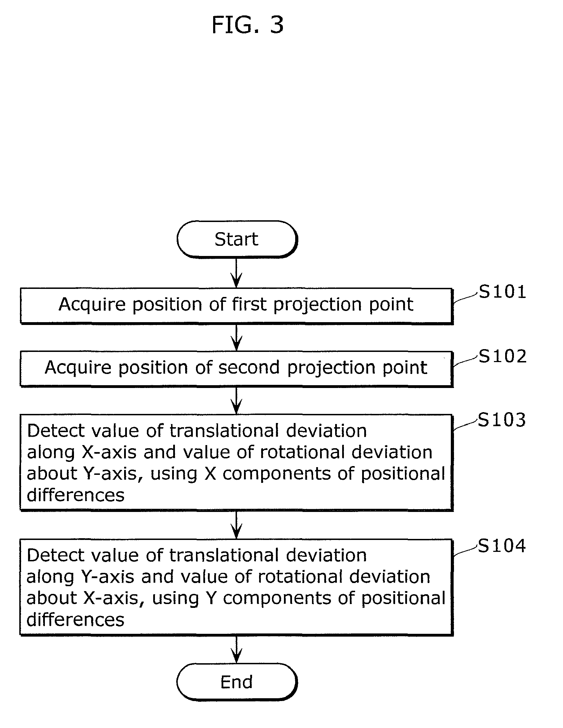

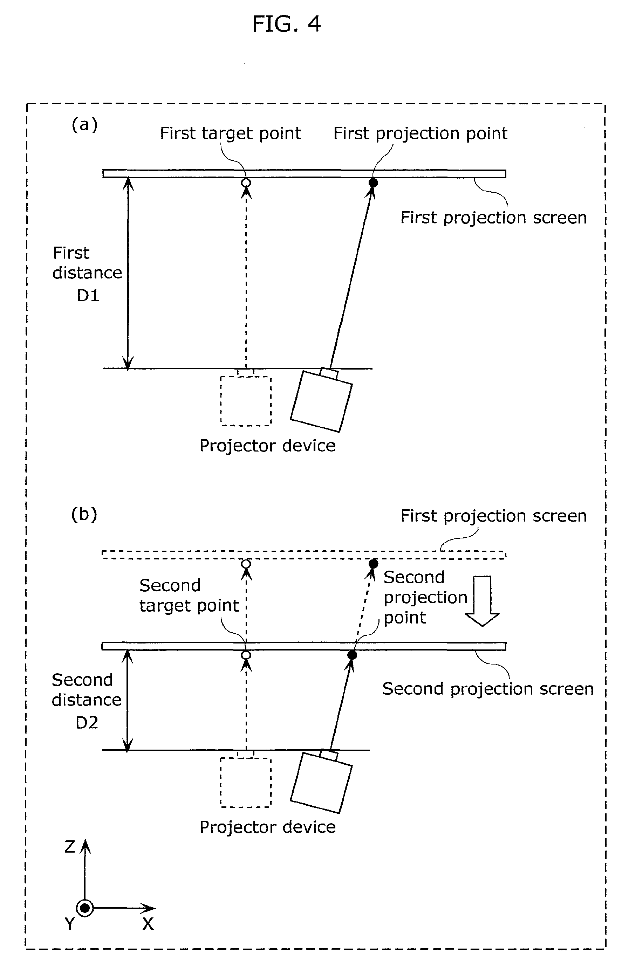

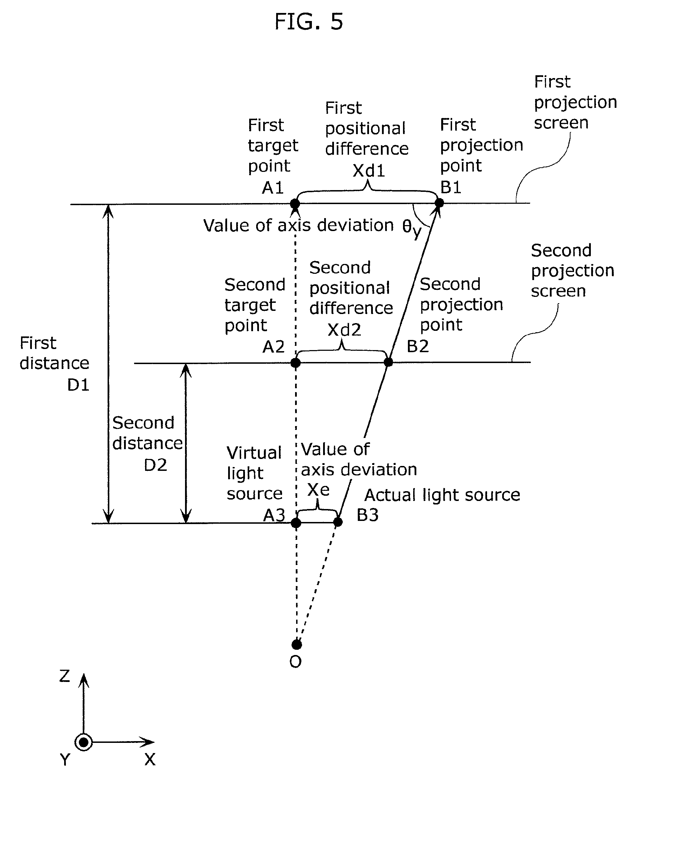

FIG. 3 is a flowchart illustrating an example of an operation performed by the axis deviation detecting device according to Embodiment 1. FIG. 4 and FIG. 5 are diagrams for explaining specific examples of the method of detecting a value of a translational deviation along the X-axis and a value of a rotational deviation about the Y-axis according to Embodiment 1. Here, FIG. 4 and FIG. 5 each illustrate the case where the first projection point and the second projection point are points on an optical axis of the projector device.

First, the first position acquisition unit 101 acquires a position of the first projection point (S101). For example, as illustrated in (a) in FIG. 4 and FIG. 5, the first position acquisition unit 101 acquires a coordinate value of a first projection point B1 projected targeting a first target point A1 on the first projection screen located at a first distance D1 therefrom.

Next, the second position acquisition unit 102 acquires a position of the second projection point (S102). For example, as illustrated in (b) in FIG. 4 and FIG. 5, the second position acquisition unit 102 acquires a coordinate value of a second projection point B2 projected targeting a second target point A2 on the second projection screen located at a second distance D2 therefrom.

According to the present embodiment, the second projection screen is, for example, the first projection screen which is shifted in the optical axis direction of the projector device, as illustrated in (b) in FIG. 4. It is to be noted that the projector device may be shifted instead of the first projection screen. In addition, when the second projection screen is semi-transmissive, the projector device may project both of the first projection point and the second projection point with both of the first projection screen and the second projection screen being placed. More specifically, the first projection screen and the second projection screen may be placed in an arbitrary manner as long as the distance between the projector device and the first projection screen in the optical axis direction is different from the distance between the projector device and the second projection screen in the optical axis direction.

Next, the first axis deviation detecting unit 103 detects a value of a translational deviation along the X-axis and a value of a rotational deviation about the Y-axis, using an X component of the first positional difference and an X component of the second positional difference (S103). Here, a specific example of the method of detecting a value of an axis deviation performed by the first axis deviation detecting unit 103 will be described with reference to FIG. 5.

In FIG. 5, the X component of the first positional difference between the first target point A1 and the first projection point B1 is denoted as Xd1. Furthermore, the X component of the second positional difference between the second target point A2 and the second projection point B2 is denoted as Xd2. In FIG. 5, a virtual light source is denoted as A3, and an actual light source is denoted as B3.

At this time, a value of a translational deviation along the X-axis Xe and a value of a rotational deviation about the Y-axis θy are calculated based on a similarity relation between a triangle OA2B2 and a triangle OA3B3. More specifically, a value of a translational deviation along the X-axis Xe and a value of a rotational deviation about the Y-axis θy are calculated using Expression 1 and Expression 2 below.

[Math. 1]

$$X_e = \frac{D_1 X_{d2} - D_2 X_{d1}}{D_1 - D_2} \qquad \text{Expression 1}$$

[Math. 2]

$$\theta_y = \mathrm{atan}\left(\frac{D_1 - D_2}{X_{d1} - X_{d2}}\right) \qquad \text{Expression 2}$$

Lastly, the second axis deviation detecting unit 104 detects a value of a translational deviation along the Y-axis and a value of a rotational deviation about the X-axis, using a Y component of the first positional difference and a Y component of the second positional difference (S104). For example, a value of a translational deviation along the Y-axis Ye and the value of a rotational deviation about the X-axis θx are calculated using Expression 3 and Expression 4 below, in the same manner as the value of a translational deviation along the X-axis Xe and the value of a rotational deviation about the Y-axis θy.

[Math. 3]

$$Y_e = \frac{D_1 Y_{d2} - D_2 Y_{d1}}{D_1 - D_2} \qquad \text{Expression 3}$$

[Math. 4]

$$\theta_x = \mathrm{atan}\left(\frac{D_1 - D_2}{Y_{d1} - Y_{d2}}\right) \qquad \text{Expression 4}$$

Here, Yd1 denotes a Y component of the first positional difference. In addition, Yd2 denotes a Y component of the second positional difference.

[Advantageous Effects]

As described above, with the axis deviation detecting device 100 according to the present embodiment, it is possible to detect four values of axis deviations (values of each of a translational deviation along the horizontal axis, a rotational deviation about the vertical axis, a translational deviation along the vertical axis, and a rotational deviation about the horizontal axis), using the positions of the first projection point and the second projection point projected on the first projection screen and the second projection screen which have different distances from the projector device. In sum, the axis deviation detecting device 100 is capable of efficiently detecting a plurality of axis deviations which include a translational deviation along an axis and a rotational deviation about an axis. It is possible to reduce the load of a user in assembling and placing the projector device, by adjusting a projector device and the like using a plurality of axis deviations which include a translational deviation along an axis and a rotational deviation about an axis detected as described above. For example, in the case where a projector device is integrated into a different device (an automobile, for example), it is also possible to reduce the number of man-hours for assembling the different device.

[Embodiment 2]

Next, Embodiment 2 will be described in detail with reference to the accompanying Drawings. An axis deviation detecting device according to the present embodiment further detects a translational deviation along an optical axis and a rotational deviation about an optical axis. It is to be noted that, in the present embodiment, description for structural elements substantially the same as structural elements in Embodiment 1 will be omitted as necessary for avoiding redundant description.

[Configuration]

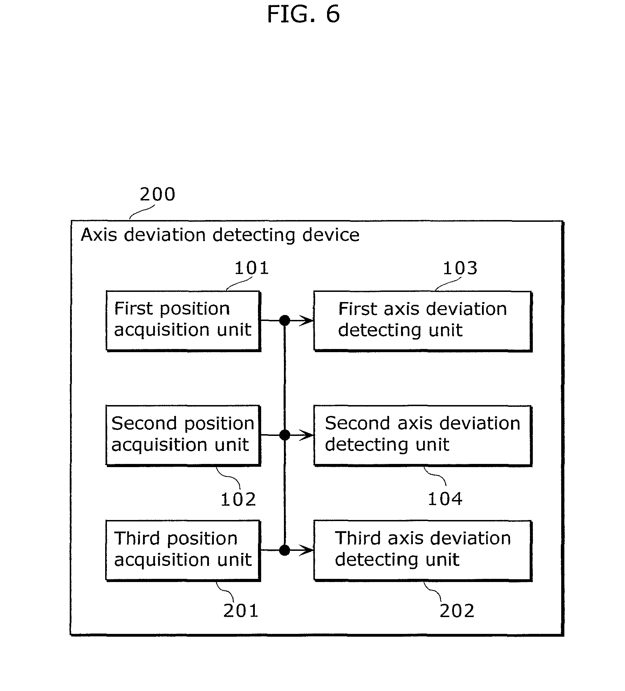

FIG. 6 is a block diagram illustrating an example of the functional configuration of a deviation detecting device according to Embodiment 2. As illustrated in FIG. 6, the deviation detecting device 200 includes: a first position acquisition unit 101; a second position acquisition unit 102; a first deviation detecting unit 103; a second deviation detecting unit 104; a third position acquisition unit 201; and a third axis deviation detecting unit 202. The third position acquisition unit 201 acquires a position of a third projection point projected targeting a third target point on the first projection screen that is located at a first distance from the projector device. More specifically, the third position acquisition unit 201 acquires, from a user, position information indicating a position of the third projection point on the first projection screen via a user interface, for example. In addition, the third position acquisition unit 201 may acquire position information indicating a position of the third projection point on the first projection screen from a sensor which detects the position of the third projection point on the first projection screen, for example.
The third axis deviation detecting unit 202 detects a value of a translational deviation along an optical axis and a value of a rotational deviation about an optical axis, using a positional relationship between the first projection point and the third projection point, and a positional relationship between the first target point and the third target point.
It is to be noted that a specific example of a method of detecting a value of the translational deviation along the optical axis and a value of the rotational deviation about an optical axis, performed by the third axis deviation detecting unit 202, will be described later with reference to the accompanying Drawings.

[Operation]

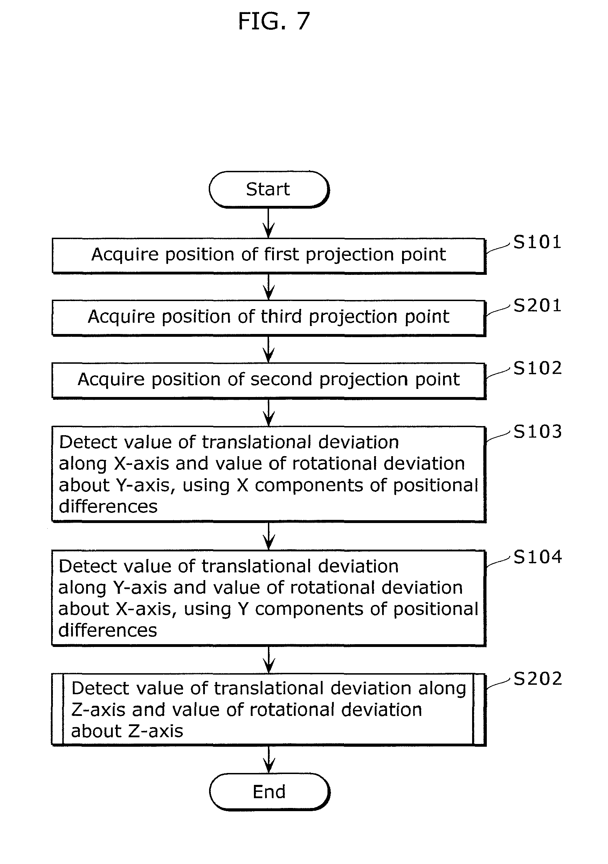

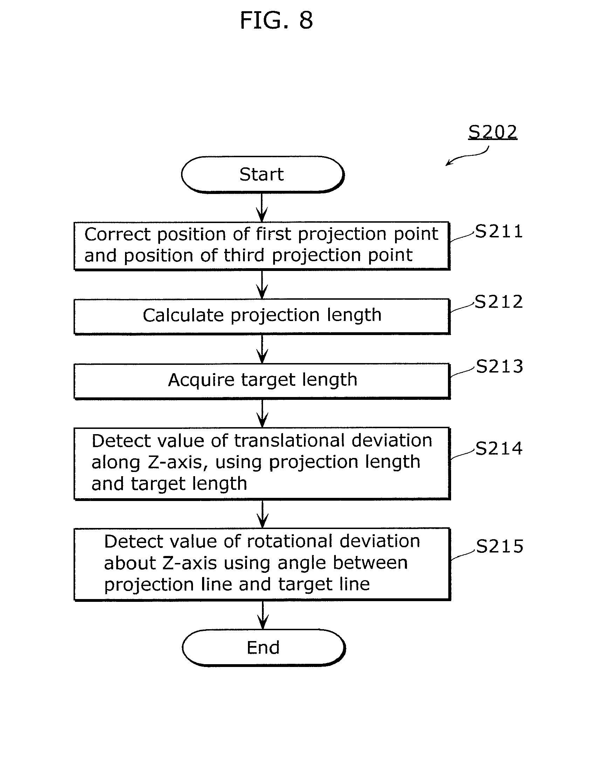

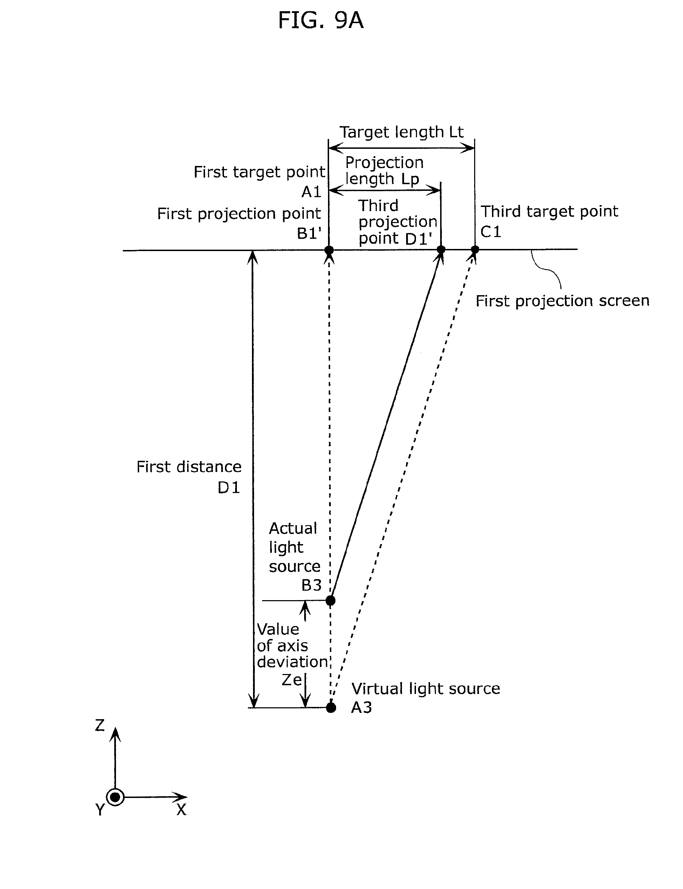

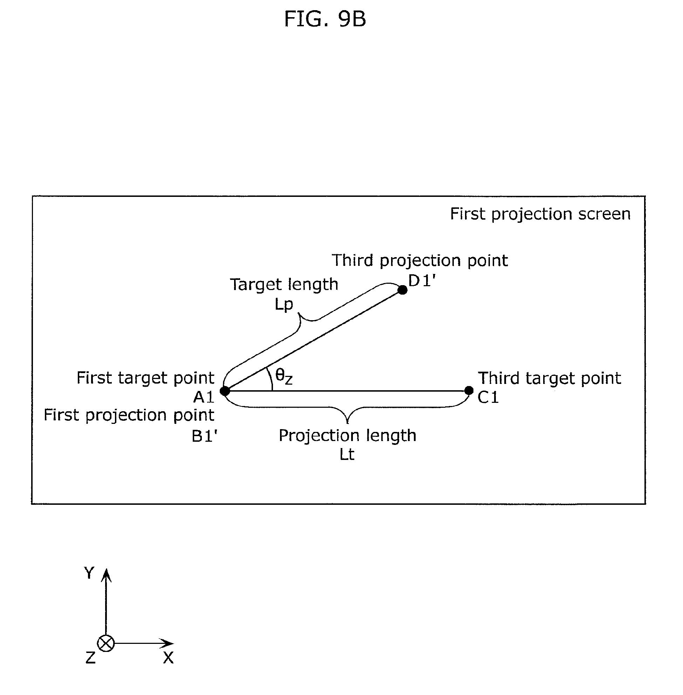

Next, an operation performed by the axis deviation detecting device 200 configured as described above will be explained. FIG. 7 is a flowchart illustrating an example of an operation performed by the axis deviation detecting device according to Embodiment 2.
Subsequent to execution of Step S101, the third position acquisition unit 201 acquires a position of the third projection point (S201). Then, Steps S102 to Step S104 are executed in the same manner as Embodiment 1.
Next, the third axis deviation detecting unit 202 detects a value of a translational deviation along a Z-axis and a value of a rotational deviation about the Z-axis, using the position of the third target point and the position of the third projection point (S202). Details of the processing will be described with reference to FIG. 8, FIG. 9A, and FIG. 9B.
FIG. 8 is a flowchart illustrating an example of an operation performed by a third axis deviation detecting unit according to Embodiment 2. In other words, FIG. 8 illustrates details of Step S202 of FIG. 7. In addition, FIG. 9A and FIG. 9B are diagrams for explaining a specific example of the method of detecting a value of a translational deviation along the Z-axis and a value of a rotational deviation about the Z-axis according to Embodiment 2.
First, the third axis deviation detecting unit 202 corrects the position of the first projection point and the position of the third projection point, using the values of axis deviations including the translational deviation along the X-axis, the rotational deviation about the X-axis, the translational deviation along the Y-axis, and the rotational deviation about the Y-axis (S211). With this, the third axis deviation detecting unit 202 removes the effect of the translational deviation along the X-axis, the rotational deviation about the X-axis, the translational deviation along the Y-axis, and the rotational deviation about the Y-axis, from the third projection point.
More specifically, the third axis deviation detecting unit 202 corrects an X component of the position of the first projection point and an X component of the position of the third projection point, using the value of the translational deviation along the X-axis and the rotational deviation about the Y-axis. Furthermore, the third axis deviation detecting unit 202 corrects a Y component of the position of the first projection point and a Y component of the position of the third projection point, using the value of the translational deviation along the Y-axis and the rotational deviation about the X-axis.
More specifically, when the first projection point and the third projection point are approximated to points on the optical axis, for example, the third axis deviation detecting unit 202 corrects X coordinate values (X components) and Y coordinate values (Y components) of the first projection point and the third projection point, using Expression 5 to Expression 8 below.
[Math. 5]

$$X_1' = X_1 - X_e - \frac{D_1}{\tan\theta_y}$$ Expression 5

[Math. 6]

$$Y_1' = Y_1 - Y_e - \frac{D_1}{\tan\theta_x}$$ Expression 6

[Math. 7]

$$X_3' = X_3 - X_e - \frac{D_1}{\tan\theta_y}$$ Expression 7

[Math. 8]

$$Y_3' = Y_3 - Y_e - \frac{D_1}{\tan\theta_x}$$ Expression 8

Here, X1' denotes a post-correction X coordinate value of the first projection point. X1 denotes a pre-correction X coordinate value of the first projection point. Y'1 denotes a post-correction Y coordinate value of the first projection point. Y1 denotes a pre-correction Y coordinate value of the first projection point. X3' denotes a post-correction X coordinate value of the third projection point. X3 denotes a pre-correction X coordinate value of the third projection point. Y'3 denotes a pre-correction Y coordinate value of the third projection point. Y3 denotes a pre-correction Y coordinate value of the third projection point.

It is to be noted that, in FIG. 9A and FIG. 9B, a corrected position of the first projection point when the first projection point is a point on the optical axis is illustrated. In other words, the corrected position of the first projection point matches the position of the first target point when the first projection point is a point on the optical axis.

Next, the third axis deviation detecting unit 202 calculates a projection length (S212). The projection length is a length between the corrected position of the first projection point and the corrected position of the third projection point. For example, in FIG. 9A and FIG. 9B, the third axis deviation detecting unit 202 calculates a projection length Lp using a post-corrected coordinate value of the first projection point B1' and a post-corrected coordinate value of the third projection point D1'.

Next, the third axis deviation detecting unit 202 acquires a target length (S213). The target length is a length between a position of the first target point and a position of the third target point. For example, in FIG. 9A and FIG. 9B, the third axis deviation detecting unit 202 calculates a target length Lt using a coordinate value of the first target point A1 and a coordinate value of the third target point C1.

It is to be noted that, when the position of the first target point and the position of the third target point are predetermined, the third axis deviation detecting unit 202 may acquire the target length from a storage unit (not illustrated).

Next, the third axis deviation detecting unit 202 detects a value of a translational deviation along the optical axis, using the projection length and the target length (S214). Here, a specific example of the method of detecting a value of a translational deviation along the Z-axis performed by the third axis deviation detecting unit 202, with reference to FIG. 9A.

In FIG. 9A, a value of a translational deviation along the Z-axis Ze is calculated based on a similarity relation between a triangle A3A1C1 and a triangle B3B1'D1'. More specifically, a value of a translational deviation along the Z-axis Ze is calculated using Expression 9 below.

[Math. 9]

$$Z_e = D_1\left(1 - \frac{L_p}{L_t}\right)$$

Expression 9

Lastly, the third axis deviation detecting unit 202 detects a value of a rotational deviation about the optical axis using an angle between a projection line and a target line (S215). The projection line is a line passing through the corrected first projection point and the corrected third projection point on the first projection screen. The target line is a line passing through the first target point and the third target point on the first projection screen.

More specifically, in the case of FIG. 9B, for example, the third axis deviation detecting unit 202 detects an angle $\theta z$ between a line passing through the corrected first projection point B1' and the corrected third projection point D1' and a line passing through the first target point A1 and the third target point C1, as a value of a rotational deviation about the optical axis.

[Advantageous Effects]

As described above, with the axis deviation detecting device 200 according to the present embodiment, it is possible to detect a value of a translational deviation along an optical axis and a value of a rotational deviation about an optical axis, using the position of the third projection point projected onto the first projection screen. More specifically, the axis deviation detecting device 200 is capable of detecting a value of a translational deviation along an optical axis and a value of a rotational deviation about an optical axis, using the positions of the first projection point and the third projection point which are corrected using four values of axis deviations (values of a translational deviation along the horizontal axis, a rotational deviation about the vertical axis, a translational deviation along the vertical axis, and a rotational deviation about the horizontal axis). Therefore, the axis deviation detecting device 200 is capable of detecting, efficiently and relatively easily, more axis deviations including a translational deviation along an axis and a rotational deviation about an axis.

[Embodiment 3]

Next, Embodiment 3 will be described in detail with reference to the accompanying Drawings. In the present embodiment, a projector device which stores a plurality of axis deviations which include a translational deviation along an axis and a rotational deviation about an axis detected by the axis deviation detecting device according to Embodiment 1 and Embodiment 2 will be described.

Hereinafter, a head-up display (hereinafter simply referred to as HUD) device will be described as one example of the projector device according to the present embodiment. A HUD device is a system which projects an image on the windshield of an automobile such that a virtual image appears in front of the windshield (i.e. outside the automobile), in the field of view of the user (driver).

[Configuration]

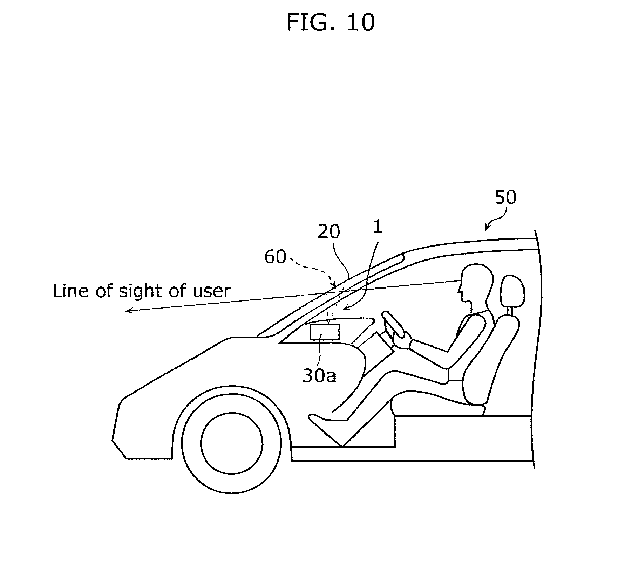

FIG. 10 is an example of how the HUD device according to Embodiment 3 is installed. As illustrated in FIG. 10, the HUD device 1 includes a projector device 30a and a combiner 60 (which includes a transparent display panel).

The projector device 30a is installed in a transport vehicle, such as an automobile 50. For example, the projector device 30a is installed on the dashboard of the automobile 50. The combiner 60 is a projection screen installed on a portion of a windshield 20 of the automobile 50. The projector device 30a projects an image on the combiner 60 by shining light on the combiner 60. Since the combiner 60 is, for example, a polarizing element, an element that selectively passes certain wavelengths, or a one-way mirror, the image projected by the projector device 30a is superimposed on the scenery outside of the automobile. It should be noted that there are instances when the windshield 20 itself possesses the functions of the combiner 60.

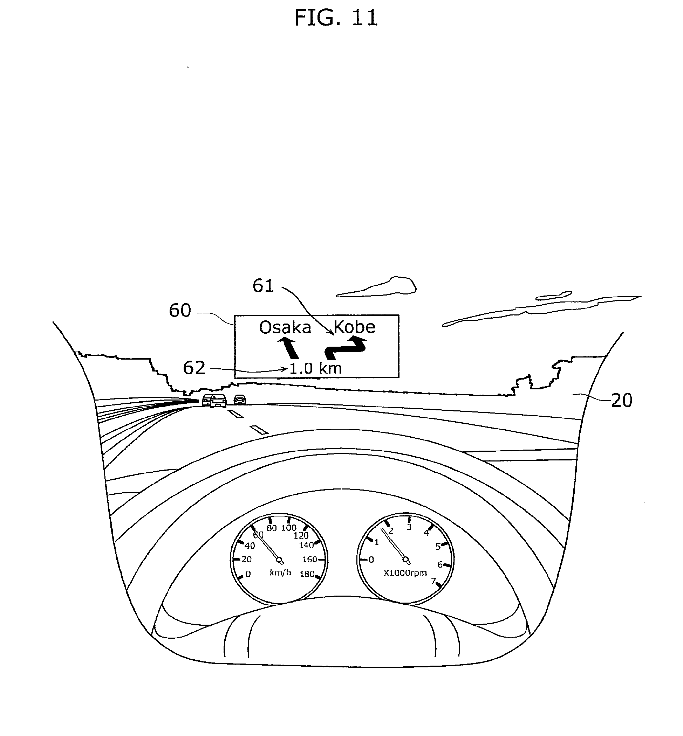

FIG. 11 illustrates an example of what the user sees when looking through the windshield. As described above, the combiner 60 is installed on the windshield 20. An image projected by the projector device 30a is displayed on the combiner 60. As illustrated in FIG. 11, the projector device 30a includes the function of displaying, for example, navigation information (such as the route to a destination) or automobile information (such as gas mileage) on the combiner 60. For example, the projector device 30a displays, on the combiner 60, an image (one example of a content image) showing route information 61 (Osaka, Kobe, and the arrows pointing the way to Osaka or Kobe) to a destination and distance information 62 (1.0 km) on distance to a destination. As illustrated in FIG. 11, since the image projected by the projector device 30a is displayed among the scenery to the front of the automobile, the user driving the automobile 50 can view information helpful to driving without changing his or her line of sight.

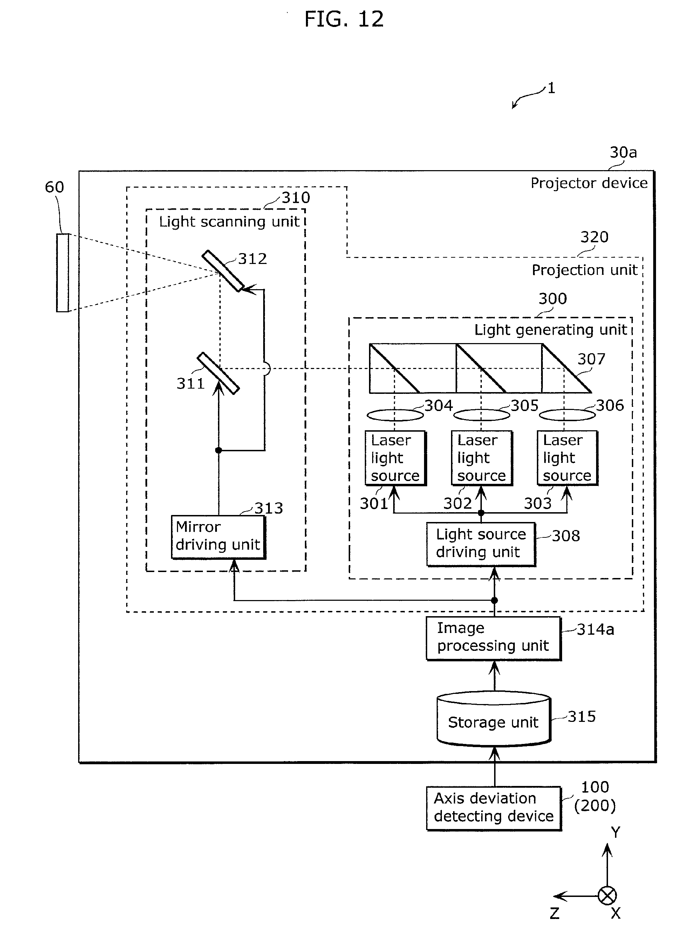

FIG. 12 is a block diagram illustrating an example of the configuration of the HUD device according to Embodiment 3.

The projector device 30a includes an image processing unit 314a, a storage unit 315, and a projection unit 320.

The image processing unit 314a acquires an image (video) from outside the projector device 30a. Then, the image processing unit 314a corrects the image using the plurality of axis deviations which include a translational deviation along an axis and a rotational deviation about an axis and are stored in the storage unit 315. For example, the image processing unit 314a corrects an image by performing projective transformation (homography) on the image, using the plurality of axis deviations which include a translational deviation along an axis and a rotational deviation about an axis. It is to be noted that, a detailed description for image correction using a value of the axis deviation will be omitted because such an image correction is disclosed by PTL 1 and the like.

It is to be noted that, according to the present embodiment, a distance between the projector device 30a and the combiner 60 is assumed to be substantially the same as the first distance of Embodiment 1 or 2, and the image is corrected using the first distance.

In addition, the image processing unit 314a performs control for projecting the corrected image onto the combiner 60. More specifically, the image processing unit 314a controls driving of a first mirror 311 and a second mirror 312 via a mirror driving unit 313, based on an image signal (video signal). Along with the above, the image processing unit 314a controls irradiation of a laser beam performed by laser light sources 301 to 303, via a light source driving unit 308. More specifically, the light source driving unit 308 performs control for causing the laser light sources 301 to 303 to irradiate laser beams having corresponding colors for the respective pixels in an image, with a scanning timing of the laser beam performed by the light scanning unit 310. An image indicating route information 61, distance information 62, and the like projected on the combiner 60 is formed by the laser light sources 301 to 303 for forming images.

The storage unit 315 is, for example, a non-volatile memory. The storage unit 315 stores values of the plurality of axis deviations which include the translational deviation along an axis and the rotational deviation about an axis and are detected by the axis deviation detecting device 100 (200). More specifically, the storage unit 315 stores the values of axis deviations including the translational deviation along the X-axis, the rotational deviation about the X-axis, the translational deviation along the Y-axis, and the rotational deviation about the Y-axis which are detected by the axis deviation detecting device 100 according to Embodiment 1, for example. In addition, the storage unit 315 stores the values of axis deviations including the translational deviation along the X-axis, the rotational deviation about the X-axis, the translational deviation along the Y-axis, and the rotational deviation about the Y-axis which are detected by the axis deviation detecting device 200 according to Embodiment 2, for example.

The projection unit 320 projects the image corrected by the image processing unit 314a onto the combiner 60. More specifically, the projection unit 320 includes a light generating unit 300 and a light scanning unit 310.

The light generating unit 300 emits red light, green light, and blue light. The light generating unit 300 includes: laser light sources 301 to 303; collimate lenses 304 to 306; a dichroic prism 307, and a light source driving unit 308.

The laser light source 301 is a laser diode which irradiates a blue laser beam onto the first mirror 311 described later and included in the light scanning unit 310, through the collimated lens 304 and the dichroic prism 307. The laser light source 302 is a laser diode which irradiates a green laser beam onto the first mirror 311 included in the light scanning unit 310, through the collimated lens 305 and the dichroic prism 307. The laser light source 303 is a laser diode which irradiates a red laser beam onto the first mirror 311 included in the light scanning unit 310, through the collimated lens 306 and the dichroic prism 307.

The collimate lenses 304 to 306 collimate the laser beams emitted from the laser light sources 301 to 303, respectively.

The dichroic prism 307 changes the light path of each of the laser beams which have passed through the respective collimate lenses 304 to 306, to guide the laser beam to the first mirror 311.

The light source driving unit 308 adjusts the amount of light of the laser light sources 301 to 303 by supplying a driving current to each of the laser light sources 301 to 303.

The light scanning unit 310 projects an image onto the combiner 60 by scanning the laser beam emitted from the light generating unit 300. More specifically, the light scanning unit 310 includes the first mirror 311, the second mirror 312, and the mirror driving unit 313.

The first mirror 311 scans a laser beam in a horizontal direction by swinging in the horizontal direction. The second mirror 312 scans a laser beam in a vertical direction by swinging in the vertical direction. The mirror driving unit 313 supplies a drive signal to the first mirror 311 and the second mirror 312 to cause the first mirror 311 and the second mirror 312 to swing.

[Operation]

Next, an operation performed by the projector device 30a configured as described above will be explained.

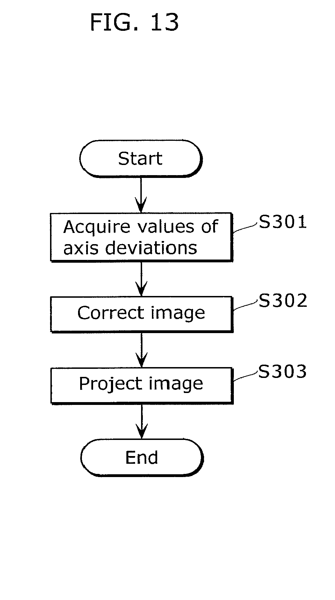

FIG. 13 is a flowchart illustrating an operation performed by the projector device according to Embodiment 3.

First, the image processing unit 314a acquires, from the storage unit 315, a plurality of axis deviations which include a translational deviation along an axis and a rotational deviation about an axis (S301). The image processing unit 314a corrects the image using the plurality of axis deviations which include a translational deviation along an axis and a rotational deviation about an axis (S302). The projection unit 320 projects the corrected image onto the combiner 60 (S303).

[Advantageous Effects]

As described above, with the projector device 30a according to the present embodiment, it is possible to store, into the storage unit 315, the plurality of axis deviations which include a translational deviation along an axis and a rotational deviation about an axis and are detected by the axis deviation detecting device 100 or 200 according to Embodiment 1 or 2. Then, the projector device 30a is capable of correcting the image using the plurality of axis deviations which include a translational deviation along an axis and a rotational deviation about an axis and are stored in the storage unit 315. This allows the projector device 30a to reduce distortion and positional shift of the image projected on the projection screen.

In particular, with the projector device 30a which includes the laser light source that emits light having a red component (R), the laser light source that emits light having a greed component (G), and the laser light source that emits light having a blue component (B), and is described as an example in the present embodiment, it is difficult to adjust the optical axis of each of the laser light sources, and thus a translational deviation along an axis and a rotational deviation about an axis are likely to occur. Accordingly, the projector device 30a is capable of more properly correcting distortion and positional shift of an image by correcting the image using the values of the plurality of axis deviations which include a translational deviation along an axis and a rotational deviation about an axis.

[Embodiment 4]

Next, Embodiment 4 will be described in detail with reference to the accompanying Drawings. A projector device according to the preset embodiment acquires a distance between the projector device and a projection screen (combiner) to correct an image using the acquired distance. It is to be noted that, in the present embodiment, description for structural elements substantially the same as structural elements in Embodiment 3 will be omitted as necessary for avoiding redundant description.

[Configuration]

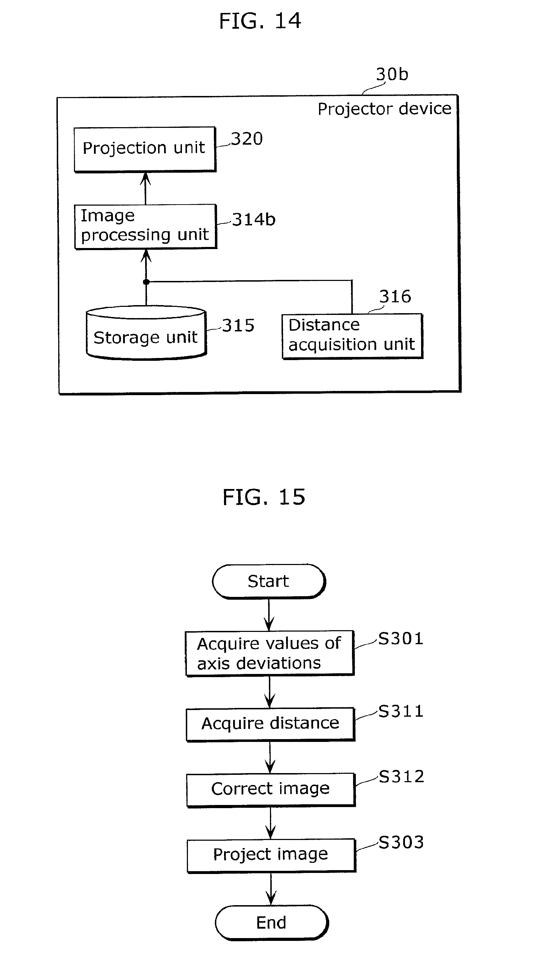

FIG. 14 is a block diagram illustrating a configuration of the projector device according to Embodiment 4. As illustrated in FIG. 14, a projector device 30b includes an image processing unit 314b, the storage unit 315, a distance acquisition unit 316, and the projection unit 320.

The distance acquisition unit 316 acquires a distance between the projector device 30b and the projection screen. For example, the distance acquisition unit 316 acquires a distance from a distance sensor. In addition, the distance acquisition unit 316 may acquire a distance that is actually measured, from a user via a user interface.

The image processing unit 314b corrects the image using (i) the values of the plurality of axis deviations which include a translational deviation along an axis and a rotational deviation about an axis and are stored in the storage unit 315 and (ii) the distance acquired by the distance acquisition unit 316. In other words, the image processing unit 314b corrects the image using not the first distance but an actual distance.

[Operation]

Next, an operation performed by the projector device 30b configured as described above will be explained.

FIG. 15 is a flowchart illustrating an operation performed by the projector device according to Embodiment 4.

Subsequent to execution of Step S301, the distance acquisition unit 316 acquires a distance between the projector device 30b and the projection screen (S311). The image processing unit 314b corrects the image using the values of the plurality of axis deviations which include a translational deviation along an axis and a rotational deviation about an axis, and the distance (S312). Then, Step S303 is executed.

[Advantageous Effects]

With the projector device 30b according to the preset embodiment, it is possible to correct an image using the distance between the projector device 30b and a projection screen (combiner 60). Accordingly, the projector device 30b is capable of properly correcting an image even when the distance between the projector device 30b and the projection screen differs from an expected distance (a distance at the time when values of axis deviations are detected). In other words, the projector device 30b is capable of more properly correcting an image according to an actual state of placement.

[Embodiment 5]

Next, Embodiment 5 will be described in detail with reference to the accompanying Drawings. A projector device according to the present embodiment adjusts a value of axis deviation according to a change in a position of the projector device with respect to a projection screen (combiner). It is to be noted that, in the present embodiment, description for structural elements substantially the same as structural elements in Embodiment 3 will be omitted as necessary for avoiding redundant description.

[Configuration]

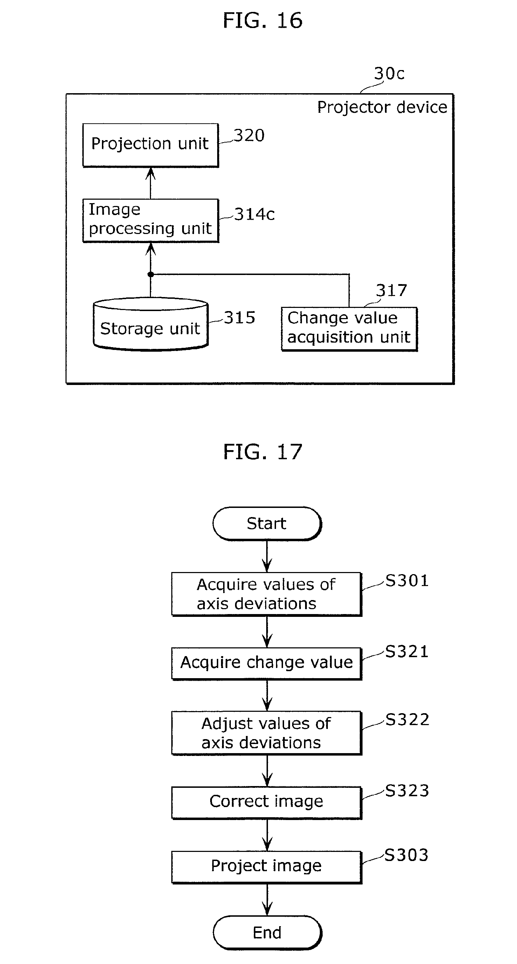

FIG. 16 is a block diagram illustrating a configuration of the projector device according to Embodiment 5. As illustrated in FIG. 16, a projector device 30c includes an image processing unit 314c, the storage unit 315, a change value acquisition unit 317, and the projection unit 320.
The change value acquisition unit 317 acquires a positional change value of the projector device 30c with respect to the projection screen. More specifically, the change value acquisition unit 317 acquires at least one of positional change values of the projector device 30c with respect to the projection screen, among positional change values of a translational change along the X-axis, a rotational change about the X-axis, a translational change along the Y-axis, and a rotational change about the Y-axis, a translational change along the Z-axis, and a rotational change about the Z-axis.
For example, the change value acquisition unit 317 may acquire a positional change value from a user via a user interface. In addition, when the projector device 30c is mounted on a mobile object (an automobile, for example), the change value acquisition unit 317 may acquire a positional change value from a vibration sensor.
The image processing unit 314c adjusts at least one of the values of a plurality of axis deviations which include a translational deviation along an axis and a rotational deviation about an axis, based on the positional change value acquired by the change value acquisition unit 317. More specifically, the image processing unit 314c adjusts a value of a translational deviation along the X-axis by adding the positional change value in the x-axis direction to a value of a translational deviation along the X-axis, for example.
Then, the image processing unit 314c corrects the image using the values of a plurality of axis deviations which include a translational deviation along an axis and a rotational deviation about an axis and include one or more adjusted values of axis deviations.

[Operation]

Next, an operation performed by the projector device 30c configured as described above will be explained.
FIG. 17 is a flowchart illustrating an operation performed by the projector device according to Embodiment 5.
Subsequent to execution of Step S301, the change value acquisition unit 317 acquires a positional change value of the projector device 30c with respect to the projection screen. The image processing unit 314c adjusts a value of an axis deviation using the acquired positional change value (S322). In addition, the image processing unit 314c corrects an image using the adjusted value of the axis deviation (S323). Then, Step S303 is executed.

[Advantageous Effects]

As described above, with the projector device 30c according to the present embodiment, it is possible to adjust a value of an axis deviation using a positional change value of the projector device 30c with respect to a projection screen (combiner 60). Accordingly, even when a position of the projector device 30c changes after a value of an axis deviation is detected, for example, the projector device 30c is capable of easily adjusting the value of the axis deviation according to the positional change. As a result, the projector device 30c is capable of more properly correcting an image according to an actual state of placement.

[Embodiment 6]

Next, Embodiment 6 will be described in detail with reference to the accompanying Drawings. A projector device according to the present embodiment includes the axis deviation detecting device according to Embodiment 1 or 2. It is to be noted that, in the present embodiment, description for structural elements substantially the same as structural elements in Embodiment 3 will be omitted as necessary for avoiding redundant description.

[Configuration]

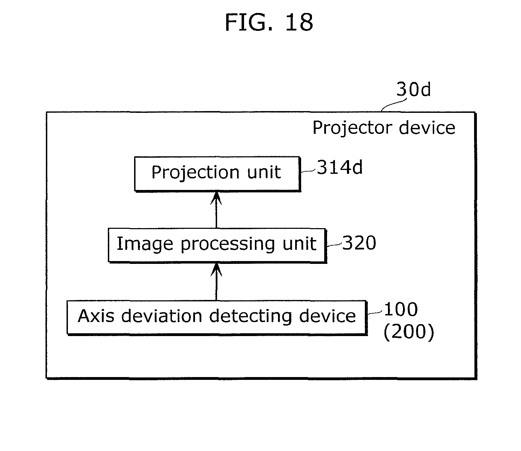

FIG. 18 is a block diagram illustrating a configuration of the projector device according to Embodiment 6. As illustrated in FIG. 18, a projector device 30d includes the axis deviation detecting device 100 (200), an image processing unit 314d, and the projection unit 320.

The axis deviation detecting device 100 (200) is the same as that described in Embodiment 1 or 2, and thus description for the axis deviation detecting device 100 (200) will be omitted.

The image processing unit 314d acquires values of a plurality of axis deviations which include a translational deviation along an axis and a rotational deviation about an axis, from the axis deviation detecting device 100 (200). Other functions are the same as those of the image processing unit 314a according to Embodiment 3, and thus description for the image processing unit 314a will be omitted.

[Operation]

The operation performed by the projector device 30c is explained by the combination of the flowchart of FIG. 3 or FIG. 7 and the flowchart of FIG. 13, and thus illustration and description will be omitted here.

[Advantageous Effects]

As described above, with the projector device 30d according to the present embodiment, it is possible to include the axis deviation detecting device 100 or 200 according to Embodiment 1 or 2. Accordingly, at the time of placement of the projector device 30d, the projector device 30d is capable of detecting values of a plurality of axis deviations which include a translational deviation along an axis and a rotational deviation about an axis, according to an actual positional relationship between the projector device 30d and a projection screen. As a result, the projector device 30d is capable of more properly correcting an image according to an actual state of placement.

In particular, when the projector device 30d includes the laser light source that emits light having a red component (R), the laser light source that emits light having a greed component (G), and the laser light source that emits light having a blue component (B), it is difficult to adjust the optical axis of each of the laser light sources, and thus a translational deviation along an axis and a rotational deviation about an axis are likely to occur. Accordingly, efficiently detecting values of a plurality of axis deviations which include a translational deviation along an axis and a rotational deviation about an axis can significantly contribute to reducing the load of a user in assembling and placing the projector device 30d.

(Other embodiment)

The axis deviation detecting device and the projector device according to each of the embodiments have been described above; however, the present invention is not limited to those embodiments.

For example, the projector device 30c according to Embodiment 5 and the projector device 30d according to Embodiment 6 may be combined.

Furthermore, in each of the above-described embodiments, the case where the first projection point and the second projection point for detecting values of a translational deviation along the horizontal axis, a rotational deviation about the vertical axis, a translational deviation along the vertical axis, and a rotational deviation about the horizontal axis are points on the optical axis is described as an example, however, the first projection point and the second projection point need not necessarily be points on the optical axis. For example, when there is no translational deviation along an optical axis and rotational deviation about an optical axis, it is possible to easily detect values of a translational deviation along the horizontal axis, a rotational deviation about the vertical axis, a translational deviation along the vertical axis, and a rotational deviation about the horizontal axis, by modifying Expression 1 to Expression 4 using an angle between an optical axis and a line passing through the first projection point and the second projection point.

In addition, a point is projected for detecting a value of an axis deviation in each of the above-described embodiments, however, other shapes (for example, line segment, bar, and triangle) maybe projected. For example, when a bar is projected, a value of an axis deviation may be detected in the same manner as each of the above-described embodiments, using the positions of both ends of the bar, or the position of the center point of the bar.

In addition, although Expression for detecting a value of an axis deviation is exemplified in each of the above-described embodiments, the value of an axis deviation is not necessarily be detected using the above-described Expression. For example, six values of axis deviations (values of a translational deviation along the horizontal axis, a rotational deviation about the horizontal axis, a translational deviation along the vertical axis, a rotational deviation about the vertical axis, a translational deviation along the optical axis, and a rotational deviation about the optical axis) may be detected using determinant for simultaneously calculating the six values of axis deviations. In this case, the values of a plurality of axis deviations which include a translational deviation along an axis and a rotational deviation about an

axis are not necessarily be sequentially detected as in the case of Embodiment 2, and may be simultaneously detected.

**[0128]** Furthermore, two or three projection points are used for detecting a value of an axis deviation in each of the above-described embodiments; however, four or more projection points may be used. In this case, for example, six values of axis deviations may be detected in plural sets while changing the combination of the projection points. A statistical representative value (an average value, a median value, or the like) of the detected values of axis deviations in plural sets may be calculated. With this, it is possible to improve an accuracy in detecting the value of an axis deviation.

**[0129]** In addition, each of the above-described axis deviation detecting devices may more specifically be a computer system configured from a microprocessor, a ROM, a RAM, a hard disk drive, a display unit, a keyboard, and a mouse, for example. A computer program is stored in the RAM or the hard disk drive. The devices achieve their respective functions as a result of the microprocessor operating according to a computer program. Here, the computer program is configured of a plurality of pieced together instruction codes indicating a command to the computer in order to achieve a given function.

**[0130]** A portion or all of the components of each of the above-described axis deviation detecting devices may be configured from one system large scale integration (LSI). A system LSI is a super-multifunction LSI manufactured with a plurality of components integrated on a single chip, and specifically is a computer system configured of a microprocessor, a ROM, and a RAM, for example. The computer program is stored in the RAM. The system LSI achieves its function as a result of the microprocessor operating according to the computer program.

**[0131]** A portion or all of the components of each of the axis deviation detecting devices may be configured from an IC card that is detachably attached to each of the axis deviation detecting devices or a stand-alone module. The IC card and the module are computer systems configured from a microprocessor, a ROM, and a RAM, for example. The IC card and the module may include the super-multifunction LSI described above. The IC card and the module achieve their function as a result of the microprocessor operating according to the computer program. The IC card and the module may be tamperproof.

**[0132]** In addition, the present invention may also be a method described above. In addition, the present invention may also be a computer program realizing the method described above with a computer, or a digital signal of the computer program.

**[0133]** In addition, the present invention may also be realized as the above-described computer program or the above-described digital signal stored on a non-transitory computer-readable storage recording medium, such as a flexible disk, hard disk, CD-ROM, MO, DVD, DVD-ROM, DVD-RAM, Blu-ray™ Disc (BD), or a semiconductor memory. In addition, the present invention may also be the above-described digital signal stored on the above-mentioned non-transitory storage recording medium.

**[0134]** In addition, the present invention may also be realized by transmitting the computer program or the digital signal, for example, via an electric communication line, a wireless or wired line, a network such as the Internet, or data broadcasting.

**[0135]** In addition, the present invention may be a computer system including memory storing the computer program and a microprocessor operating according to the computer program.

**[0136]** In addition, the computer program or the digital signal may be implemented by an independent computer system by being stored on the non-transitory storage recording medium and transmitted, or sent via the network, for example

**[0137]** In addition, the preceding embodiments may be individually combined.

**[0138]** Although the present invention has been described and illustrated in detail, it is clearly understood that the same is by way of example only and is not to be taken by way of limitation, the scope of the present invention being limited only by the terms of the appended claims.

## Industrial Applicability

**[0139]** The present invention is applicable, as an axis deviation detecting device of a projector device, to detection of an axis deviation performed by a head-up display device mounted on an automobile, for example.

## Reference Signs List

**[0140]**

| | |
|---|---|
| 1 | HUD device |
| 20 | windshield |
| 30a, 30b, 30c, 30d | projector device |
| 50 | automobile |
| 60 | combiner |
| 61 | route information |

| 62 | distance information |
| 100, 200 | axis deviation detecting device |
| 101 | first position acquisition unit |
| 102 | second position acquisition unit |
| 103 | first axis deviation detecting unit |
| 104 | second axis deviation detecting unit |
| 201 | third position acquisition unit |
| 202 | third axis deviation detecting unit |
| 300 | light generating unit |
| 301, 302, 303 | laser light source |
| 304, 305, 306 | collimate lens |
| 307 | dichroic prism |
| 308 | light source driving unit |
| 310 | light scanning unit |
| 311 | first mirror |
| 312 | second mirror |
| 313 | mirror driving unit |
| 314a, 314b, 314c, 314d | image processing unit |
| 315 | storage unit |
| 316 | distance acquisition unit |
| 317 | change value acquisition unit |
| 320 | projection unit |

**Claims**

1. An axis deviation detecting device which detects an axis deviation of a projector device, the axis deviation detecting device comprising:

   a first position acquisition unit configured to acquire a position of a first projection point projected targeting a first target point on a first projection screen that is located at a first distance from the projector device;
   a second position acquisition unit configured to acquire a position of a second projection point projected targeting a second target point on a second projection screen that is located at a second distance from the projector device, the second target point corresponding to the first target point;
   a first axis deviation detecting unit configured to detect a value of a translational deviation along a horizontal axis of the projector device and a value of a rotational deviation about a vertical axis of the projector device, using (i) a horizontal component of a first positional difference between the first target point and the first projection point and (ii) a horizontal component of a second positional difference between the second target point and the second projection point; and
   a second axis deviation detecting unit configured to detect a value of a translational deviation along the vertical axis of the projector device and a value of a rotational deviation about the horizontal axis of the projector device, using (i) a vertical component of the first positional difference and (ii) a vertical component of the second positional difference.

2. The axis deviation detecting device according to Claim 1, further comprising:

   a third position acquisition unit configured to acquire a position of a third projection point projected targeting a third target point on the first projection screen; and
   a third axis deviation detecting unit configured to detect a value of a translational deviation along an optical axis of the projector device and a value of a rotational deviation about the optical axis, using (i) a positional relationship between the first projection point and the third projection point and (ii) a positional relationship between the first target point and the third target point.

3. The axis deviation detecting device according to Claim 2,
   wherein the third axis deviation detecting unit is configured to:

   correct the position of the first projection point and the position of the third projection point, using the value of the translational deviation along the horizontal axis, the value of the rotational deviation about the vertical axis, the value of the translational deviation along the vertical axis, and the value of the rotational deviation about the horizontal axis;

detect the value of the translational deviation along the optical axis of the projector device, using (i) a length between the corrected position of the first projection point and the corrected position of the third projection point and (ii) a length between the position of the first target point and the position of the third target point; and

detect the value of the rotational deviation about the optical axis of the projector device, using an angle between (i) a line passing through the corrected position of the first projection point and the corrected position of the third projection point and (ii) a line passing through the first target point and the third target point.

4. A projector device which projects an image on a projection screen, the projector device comprising:

a storage unit configured to store values of a plurality of axis deviations which include a translational deviation along an axis and a rotational deviation about an axis and are detected by the axis deviation detecting device according to any one of Claims 1 to 3;

an image processing unit configured to correct the image using the values of the plurality of axis deviations which include the translational deviation along the axis and the rotational deviation about the axis and are stored in the storage unit; and

a projection unit configured to project the corrected image on the projection screen.

5. The projector device according to Claim 4, further comprising

a distance acquisition unit configured to acquire a distance between the projector device and the projection screen, wherein the image processing unit is configured to correct the image using (i) the values of the plurality of axis deviations which include the translational deviation along the axis and the rotational deviation about the axis and are stored in the storage unit and (ii) the acquired distance.

6. A projector device which projects an image on a projection screen, the projector device comprising:

the axis deviation detecting device according to any one of Claims 1 to 3;

an image processing unit configured to correct the image using values of a plurality of axis deviations which include a translational deviation along an axis and a rotational deviation about an axis and are detected by the axis deviation detecting device; and

a projection unit configured to project the corrected image on the projection screen.

7. The projector device according to any one of Claims 4 to 6, further comprising
a change value acquisition unit configured to acquire a positional change value of the projector device with respect to the projection screen,
wherein the image processing unit is configured to:

adjust at least one of the values of the plurality of axis deviations which include the translational deviation along the axis and the rotational deviation about the axis, based on the acquired positional change value; and

correct the image using the values of the plurality of axis deviations which include the translational deviation along the axis and the rotational deviation about the axis and include at least one of the adjusted values of the plurality of axis deviations.

8. A head-up display device, comprising:

the projector device according to any one of Claims 4 to 7; and
a transparent display panel including the projection screen.

9. An axis deviation detecting method for detecting an axis deviation of a projector device, the axis deviation detecting method comprising:

acquiring a position of a first projection point projected targeting a first target point on a first projection screen that is located at a first distance from the projector device;

acquiring a position of a second projection point projected targeting a second target point on a second projection screen that is located at a second distance from the projector device, the second target point corresponding to the first target point;

detecting a value of a translational deviation along a horizontal axis of the projector device and a value of a rotational deviation about a vertical axis of the projector device, using (i) a horizontal component of a first positional difference between the first target point and the first projection point and (ii) a horizontal component of a second positional difference between the second target point and the second projection point; and

detecting a value of a translational deviation along the vertical axis of the projector device and a value of a rotational deviation about the horizontal axis of the projector device, using (i) a vertical component of the first positional difference and (ii) a vertical component of the second positional difference.

## FIG. 1

(a) Target point — Projection point — Projection screen — Projector device — Xe

(b) Target point — Projection point — Projection screen — $\theta_y$ — Z — Y — X — Projector device

# FIG. 2

Axis deviation detecting device (100)

- First position acquisition unit (101)
- Second position acquisition unit (102)
- First axis deviation detecting unit (103)
- Second axis deviation detecting unit (104)

# FIG. 3

```
        ┌─────────────┐
        │    Start    │
        └──────┬──────┘
               │
               ▼
┌──────────────────────────────────────┐
│  Acquire position of first projection point │──── S101
└──────────────┬───────────────────────┘
               │
               ▼
┌──────────────────────────────────────┐
│  Acquire position of second projection point │──── S102
└──────────────┬───────────────────────┘
               │
               ▼
┌──────────────────────────────────────┐
│  Detect value of translational deviation     │──── S103
│  along X-axis and value of rotational deviation │
│  about Y-axis, using X components of positional │
│  differences                          │
└──────────────┬───────────────────────┘
               │
               ▼
┌──────────────────────────────────────┐
│  Detect value of translational deviation     │──── S104
│  along Y-axis and value of rotational deviation │
│  about X-axis, using Y components of positional │
│  differences                          │
└──────────────┬───────────────────────┘
               │
               ▼
        ┌─────────────┐
        │     End     │
        └─────────────┘
```

# FIG. 4

(a)

First target point    First projection point

First projection screen

First
distance
D1

Projector device

(b)

First projection screen

Second
target point

Second
projection
point

Second projection screen

Second
distance
D2

Projector device

Z

Y    X

# FIG. 5

First projection screen

First target point A1

First positional difference Xd1

First projection point B1

Value of axis deviation $\theta_y$

Second target point A2

Second positional difference Xd2

Second projection point B2

Second projection screen

First distance D1

Second distance D2

Virtual light source A3

Value of axis deviation Xe

Actual light source B3

O

Z
Y
X

# FIG. 6

**200**

Axis deviation detecting device

**101**

First position
acquisition unit

**103**

First axis deviation
detecting unit

Second position
acquisition unit

Second axis deviation
detecting unit

**102**

**104**

Third position
acquisition unit

Third axis deviation
detecting unit

**201**

**202**

# FIG. 7

```
                    ┌─────────────┐
                    │    Start    │
                    └──────┬──────┘
                           │
                           ▼
   ┌────────────────────────────────────────────┐
   │  Acquire position of first projection point │────S101
   └────────────────────┬───────────────────────┘
                        │
                        ▼
   ┌────────────────────────────────────────────┐
   │  Acquire position of third projection point │────S201
   └────────────────────┬───────────────────────┘
                        │
                        ▼
   ┌────────────────────────────────────────────┐
   │ Acquire position of second projection point │────S102
   └────────────────────┬───────────────────────┘
                        │
                        ▼
   ┌────────────────────────────────────────────┐
   │ Detect value of translational deviation     │────S103
   │ along X-axis and value of rotational        │
   │ deviation about Y-axis, using X components  │
   │ of positional differences                   │
   └────────────────────┬───────────────────────┘
                        │
                        ▼
   ┌────────────────────────────────────────────┐
   │ Detect value of translational deviation     │────S104
   │ along Y-axis and value of rotational        │
   │ deviation about X-axis, using Y components  │
   │ of positional differences                   │
   └────────────────────┬───────────────────────┘
                        │
                        ▼
   ┌────────────────────────────────────────────┐
   │ Detect value of translational deviation     │────S202
   │ along Z-axis and value of rotational        │
   │ deviation about Z-axis                       │
   └────────────────────┬───────────────────────┘
                        │
                        ▼
                 ┌─────────────┐
                 │     End     │
                 └─────────────┘
```

# FIG. 8

S202

```
         ┌──────────────┐
         │    Start     │
         └──────┬───────┘
                ▼
┌────────────────────────────────────┐
│ Correct position of first projection point │   S211
│ and position of third projection point     │
└──────────────┬─────────────────────┘
               ▼
┌────────────────────────────────────┐
│       Calculate projection length         │   S212
└──────────────┬─────────────────────┘
               ▼
┌────────────────────────────────────┐
│         Acquire target length             │   S213
└──────────────┬─────────────────────┘
               ▼
┌────────────────────────────────────┐
│ Detect value of translational deviation   │
│ along Z-axis, using projection length     │   S214
│ and target length                         │
└──────────────┬─────────────────────┘
               ▼
┌────────────────────────────────────┐
│ Detect value of rotational deviation      │
│ about Z-axis using angle between          │   S215
│ projection line and target line           │
└──────────────┬─────────────────────┘
               ▼
         ┌──────────────┐
         │     End      │
         └──────────────┘
```

# FIG. 9A

# FIG. 9B

# FIG. 10

Line of sight of user

50

20

1

60

30a

# FIG. 11

60
61
Osaka  Kobe
62  1.0 km
20

# FIG. 12

# FIG. 13

Start

↓

| Acquire values of axis deviations | S301 |

↓

| Correct image | S302 |

↓

| Project image | S303 |

↓

End

## FIG. 14

30b

Projector device

Projection unit —320

↑

Image processing unit —314b

↑

Storage unit —315

Distance acquisition unit —316

## FIG. 15

Start

↓

Acquire values of axis deviations —S301

↓

Acquire distance —S311

↓

Correct image —S312

↓

Project image —S303

↓

End

## FIG. 16

30c

Projector device

Projection unit — 320

Image processing unit — 314c

Storage unit — 315

Change value acquisition unit — 317

## FIG. 17

Start

Acquire values of axis deviations — S301

Acquire change value — S321

Adjust values of axis deviations — S322

Correct image — S323

Project image — S303

End

# FIG. 18

30d

Projector device

| Projection unit | ~314d |

↑

| Image processing unit | ~320 |

↑

| Axis deviation detecting device | ~100 (200) |

Europäisches
Patentamt

European
Patent Office

Office européen
des brevets

# EUROPEAN SEARCH REPORT

Application Number

EP 14 18 9656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/085990 A1 (NEC DISPLAY SOLUTIONS LTD [JP]; OKADA TAKAYUKI [JP]) 28 June 2012 (2012-06-28) * axis deviation detecting device comprising a first position acquisition unit , a second position acquisition unit, a first axis deviation detecting unit , a second axis deviation detecting unit, and corresponding projectors and method; figures 5-7, 16-22 * | 1-9 | INV. G03B21/14 |
| X | JP 2007 264405 A (CASIO COMPUTER CO LTD) 11 October 2007 (2007-10-11) axis deviation detecting device comprising a first position acquisition unit , a second position acquisition unit, a first axis deviation detecting unit , a second axis deviation detecting unit, and corresponding projectors and method; * abstract; figures 1-4, 6b * | 1-9 | |
| A | US 8 322 863 B1 (CHO SAMUEL SEUNGMIN [US] ET AL) 4 December 2012 (2012-12-04) * image adjustmant apparatus for portable projection devices; the whole document * | 1-9 | TECHNICAL FIELDS SEARCHED (IPC) G03B |
| A | EP 1 494 486 A2 (SEIKO EPSON CORP [JP]) 5 January 2005 (2005-01-05) * image calibration section and corresponding projector; the whole document * | 1-9 | |
| A | US 2013/107229 A1 (OTANI MAKOTO [JP] ET AL) 2 May 2013 (2013-05-02) * aspect ratio converter and corresponding projector; the whole document * | 1-9 | |

The present search report has been drawn up for all claims

| Place of search | Date of completion of the search | Examiner |
|---|---|---|
| Munich | 6 March 2015 | Tomezzoli, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 9656

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2015

| Patent document cited in search report | | Publication date | Patent family member(s) | | Publication date |
|---|---|---|---|---|---|
| WO 2012085990 | A1 | 28-06-2012 | NONE | | |
| JP 2007264405 | A | 11-10-2007 | JP | 5124965 B2 | 23-01-2013 |
| | | | JP | 2007264405 A | 11-10-2007 |
| US 8322863 | B1 | 04-12-2012 | NONE | | |
| EP 1494486 | A2 | 05-01-2005 | CN | 1577051 A | 09-02-2005 |
| | | | EP | 1494486 A2 | 05-01-2005 |
| | | | JP | 4150924 B2 | 17-09-2008 |
| | | | JP | 2005038388 A | 10-02-2005 |
| | | | KR | 200362482 Y1 | 18-09-2004 |
| | | | KR | 20050004025 A | 12-01-2005 |
| | | | TW | I253006 B | 11-04-2006 |
| | | | US | 2005041216 A1 | 24-02-2005 |
| | | | US | 2008291402 A1 | 27-11-2008 |
| US 2013107229 | A1 | 02-05-2013 | CN | 103091848 A | 08-05-2013 |
| | | | JP | 2013092712 A | 16-05-2013 |
| | | | US | 2013107229 A1 | 02-05-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005039518 A